# EUROPEAN PATENT APPLICATION

(11) **EP 2 662 920 A2**
(43) Date of publication of application: **13.11.2013**
(21) Application number: 12732138.8
(22) Date of filing: 05.01.2012
(51) Int. Cl.: H01M 10/04, H01M 2/16, H01G 9/02

(54) **ELECTRODE ASSEMBLY INCLUDING ASYMMETRICALLY COATED SEPARATION MEMBRANE AND ELECTROCHEMICAL DEVICE INCLUDING ELECTRODE ASSEMBLY**

(30) Priority: 05.01.2011 KR 20110000722
(71) Applicant: Eig Ltd., Cheonan-city, Chungcheongnam-do 331-814 (KR)
(72) Inventor: KIM, Kwon Soo, Gwangju 503-060 (KR); KIM, Chi Su, Seoul 151-923 (KR); KIM, Kyung Ho, Seongnam-si Gyeonggi-do 463-910 (KR)
(74) Representative: Marconnet, Sébastien
(86) International application number: PCT/KR2012/000108
(87) International publication number: WO 2012/093864

(57) **Abstract**

The present invention provides an electrode assembly including a separation membrane, wherein one side thereof stacked with anode or cathode active materials and the other side thereof are asymmetrically coated with different materials, respectively; and an electrochemical device including the same.

## Description

### Field of the Invention

The present invention relates to an electrode assembly including a separation membrane, wherein one side thereof stacked with anode or cathode active materials and the other side thereof are asymmetrically coated with different materials, respectively; and an electrochemical device including the same.

### Background of the Invention

Recently, there has been an increasing interest in energy storage technology. Batteries have been widely used as energy sources in the fields of mobile phones, camcorders, notebook computers, PCs and electric cars, resulting in intensive research and development into them.

In this regard, electrochemical devices are one of the subjects of great interest, and particularly, development of rechargeable secondary batteries has been the focus of attention. Recently, in the development of such batteries, designs of new electrodes and batteries to improve capacity density and specific energy are mainly studied.

In terms of the shape of batteries, the demand for prismatic secondary batteries or pouch-shaped secondary batteries, which are thin enough to be applied to products, such as mobile phones, is very high, and in terms of the material for batteries, the demand for lithium secondary batteries, such as lithium ion batteries and lithium ion polymer batteries, having high energy density, high discharge voltage, and high power stability, is very high.

Further, the secondary batteries are classified based on the construction of an electrode assembly having an anode/separation membrane/cathode structure. For example, a jelly-roll type (winding type) electrode assembly, in which long-sheet type anodes and cathode are wound with a separation membrane interposed therebetween, was mainly used. However, this jelly-roll (winding type) electrode assembly had problems that, because it is prepared by densely winding the long-sheet type anodes and cathodes with the result that the jelly-roll type electrode assembly is circular or elliptical in section, stress, caused by expansion and contraction of the electrodes during charging/discharging of a battery, may be accumulated in the electrode assembly, and when the stress accumulation exceeds a specific limit, the electrode assembly may be deformed. The deformation of the electrode assembly results in non-uniform gap between the electrodes, and as a result, the performance of the battery may be abruptly deteriorated, and the safety of the battery may not be secured due to an internal short circuit of the battery. In addition, because it is difficult to rapidly wind the long-sheet type anodes and cathode while uniformly maintaining the gap between the anodes and the cathode, productivity was lowered.

In order to solve the above-mentioned problems of the jelly-roll type electrode assembly, a stack type electrode assembly, in which a number of anodes and cathodes but in a specific size unit are sequentially stacked with a separation membrane interposed therebetween, was used. However, the stack type electrode assembly had problems that it is additionally necessary to provide a process for transferring electrode plates in order to prepare the unit because a number of anodes and cathodes are sequentially stacked, and much time and effort are required to perform the sequential stacking process with the result that productivity is lowered.

On the other hand, in this stack-type electrode assembly, the separation membrane plays roles of preventing an internal short circuit by contact of the anode and the cathode of a lithium ion battery and permeating ions, and the separation membrane, generally used now, is a polyethylene (hereinafter, called "PE") or polypropylene (hereinafter, called "PP") separation membrane. However, lithium ion batteries using the PE or PP separation membrane have problems of instability of the batteries, sophistication of the battery manufacturing process, restriction of battery shape, limitation of large-capacity and the like until now. Efforts to solve the problems have continued, but have not been remarkably successful until now.

### Summary of the Invention

In order to solve the above-described problems associated with prior art, the present invention is objected to provide an electrode assembly, which comprises an asymmetrically coated separation membrane having high productivity and new stable structure; wherein both sides thereof are asymmetrically coated, i.e., one side of the separation membrane is coated with an adhesive-power reinforcing member in order to reinforce adhesive-power, and the other side is coated with a heat-resistance reinforcing member in order to reinforce heat-resistance separation membrane.

Further, the present invention is objected to provide an electrochemical device, which comprises an electrode assembly comprising the said asymmetrically coated separation membrane.

In order to accomplish one object of the present invention, the present invention provides, in an electrode assembly, which is composed by alternatively laminating a plurality of: anode units comprising an anode collector, anode active material layers coated on both sides of the anode collector, and a separation membrane attached to one side of the anode collector; and cathode units comprising an cathode collector, cathode active material layers coated on both sides of the cathode collector, and a separation membrane attached to one side of the cathode collector; an electrode assembly comprising an asymmetrically coated separation membrane, wherein one side thereof, attached to each active material in the anode unit or the cathode unit, and the other side thereof are asymmetrically coated with an adhesive-power reinforcing member and a heat-resistance reinforcing member, respectively.

The present invention is characterized that the heat-resistance reinforcing member comprises at least one ceramic selected from the group consisting of: aluminum oxide (Al₂O₃), magnesium oxide (MgO), silicon oxide (SiO₂), zirconia (ZrO₂), ceria (CeO₂), zinc oxide (ZnO), magnesium hydroxide (Mg(OH)₂), aluminum hydroxide (Al(OH)₃) and aluminum silicate(aluminum silicate).

The present invention characterized that the heat-resistance reinforcing member comprises a mixture of one ceramic selected from the group consisting of: aluminum oxide (Al₂O₃), magnesium oxide (MgO), silicon oxide (SiO₂), zirconia (ZrO₂), ceria (CeO₂), zinc oxide (ZnO), magnesium hydroxide (Mg(OH)₂), aluminum hydroxide (Al(OH)₃) and aluminum silicate(aluminum silicate), and polyvinylidene fluoride (PVdF); wherein the one ceramic, selected from the group consisting of: aluminum oxide (Al₂O₃), magnesium oxide (MgO), silicon oxide (SiO₂), zirconia (ZrO₂), ceria (CeO₂), zinc oxide (ZnO), magnesium hydroxide (Mg(OH)₂), aluminum hydroxide (Al(OH)₃) and aluminum silicate(aluminum silicate), is contained in an amount of 50 wt% or less of the total mixture.

The present invention is characterized that the heat-resistance reinforcing member comprises at least one selective copolymer selected from the group consisting of: polyetherimide, polyamide, polyimide, polycarbonate, polysulfone, polyphenylenesulfide, and polyphenyleneoxide; or a mixture thereof.

The present invention is characterized that the adhesive-power reinforcing member comprises at least one polymer selected from the group consisting of: polyvinylidenefloride (PVdF), polyethylene oxide, polyacrylonitrile, polyethylene oxide, polyacrylonitrile and polyvinylidene fluoride hexafluoropropylene.

The present invention is characterized that the asymmetrically coated separation membrane is only contained in the alternatively stacked anode units; and the alternatively stacked cathode units contain a separation membrane, wherein both sides thereof are coated with the adhesive-power member, or a separation membrane, wherein only one side thereof is coated with the adhesive-power member.

The present invention is characterized that the asymmetrically coated separation membrane is only contained in the alternatively stacked cathode units; and the alternatively stacked anode units contain a separation membrane, wherein both sides thereof are coated with the adhesive-power member, or a separation membrane, wherein only one side thereof is coated with the adhesive-power member.

Further, the present invention provides an electrochemical cell, which is composed by comprising the said electrode assembly.

The present invention is characterized that the electrochemical cell is a secondary battery or a capacitor.

### Advantageous Effects of the Invention

In the present invention, one side of a separation membrane attached to an anode active material or a cathode active material in each anode unit or a cathode unit is coated with an adhesive-power reinforcing member for giving adhesive-power and then pressed by applying heat and pressure during an electrode assembly manufacturing process, thereby attaching an active material-coated collector to the separation membrane so as to enable to operate integrally and improve workability and productivity; and also the other side of the separation membrane was coated for giving heat-resistance reinforcement against external impact or internal short-circuit and the like. Therefore, the present invention showed improved battery discharge capacity, life characteristic and safety.

### Brief Description of Drawings

The above and other objects and features of the present invention will become apparent from the following description of the invention taken in conjunction with the following accompanying drawings, which respectively show:
FIG. 1: battery structure stacked with the anode units and the cathode units according to the present invention;
FIG. 2: a drawing showing the anode unit according to the present invention;
FIG. 3: a drawing showing the cathode unit according to the present invention;
FIG. 4: a process for manufacturing the electrode assembly according to the present invention;
FIG. 5: battery structure stacked with the anode units and the cathode units according to another embodiment of the present invention;
FIG. 6: an SEM image showing the surface of the coated separation membrane according to one embodiment of the present invention;
FIG. 7: an SEM image showing the surface of the coated separation membrane according to one embodiment of the present invention;
FIG. 8: a drawing showing discharge capacities of Examples and Comparative Example according to C-rate;
FIG. 9: a drawing showing internal resistances of Examples and Comparative Example;
FIG. 10: a drawing showing life characteristics of batteries of Examples and Comparative Example; and
FIGS. 11a to 11c: nail penetration test results of batteries of Examples and Comparative Example.

### Description of Symbols

100: Anode Collector
110: Anode Active Material
200: Separation Membrane
210: Adhesive-Power Reinforcing Member
220: Heat-Resistance Reinforcing Member
300: Cathode Collector
310: Cathode Active Material

### Detailed Description of the Invention

The electrode assembly of the present invention is characterized that it is composed by alternatively laminating a plurality of: anode units comprising an anode collector, anode active material layers coated on both sides of the anode collector, and a separation membrane attached to one side of the anode collector; and cathode units comprising an cathode collector, cathode active material layers coated on both sides of the cathode collector, and a separation membrane attached to one side of the cathode collector, and the separation membrane is asymmetrically coated, wherein one side thereof, attached to each active material in the anode unit or the cathode unit, and the other side thereof are asymmetrically coated with an adhesive-power reinforcing member and a heat-resistance reinforcing member, respectively.

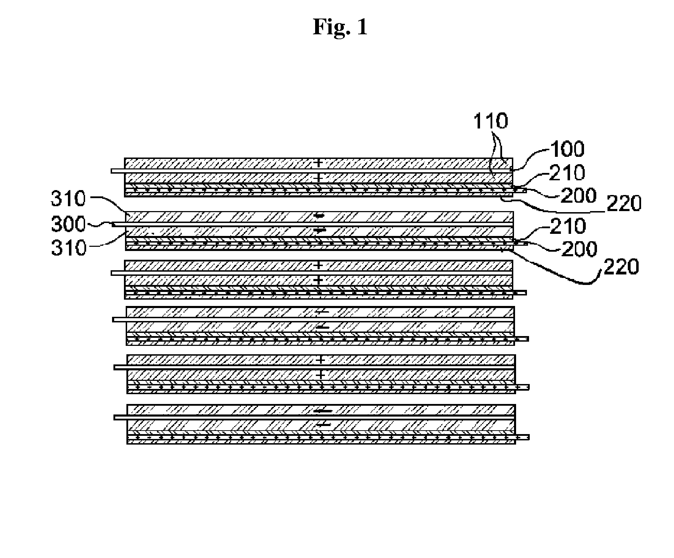

Structure of the electrode assembly according to the present invention was shown in FIG. 1. As shown in FIG. 1, the electrode assembly of the present invention is composed of anode units and cathode units, which are stacked by turns.

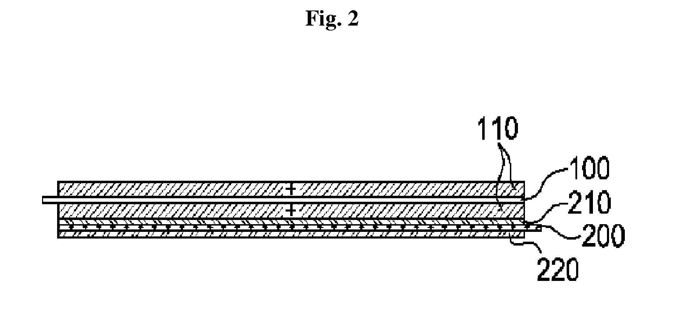

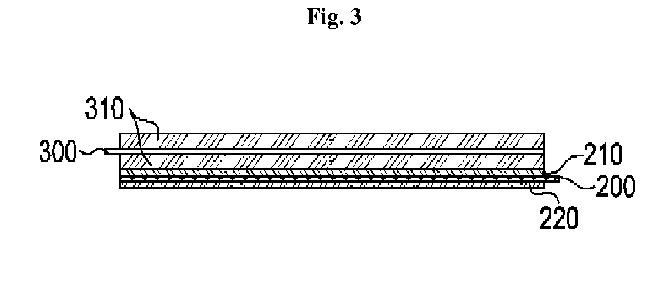

Detailed drawings of the anode unit and the cathode unit making the electrode assembly were shown in FIG. 2 and FIG. 3.

As shown in FIG. 2, the anode unit is composed of: an anode collector 100, anode active material layers 110 coated on both sides of the anode collector and a separation membrane 200 stacked on one side of the anode collector; in the anode unit, the separation membrane is stacked on one side of the anode collector; and in the anode unit, the one side 210 contacted to the anode active material layer is coated with an adhesive-power reinforcing member and the other side 220 not contacted to the anode active material layer is coated with an heat-resistance reinforcing member.

The anode active material may be a common lithium metal oxide, and specifically, it may be at least one selected from the group consisting of: lithium manganese oxide, lithium cobalt oxide, lithium nickel oxide and lithium iron phosphate, preferably.

As shown in FIG. 3, the cathode unit is composed of: an n cathode collector 300, cathode active material layers 310 coated on both sides of the cathode collector and a separation membrane 200 stacked on one side of the cathode collector. In the cathode unit, the separation membrane is stacked on one side of the cathode collector, and in the cathode unit, the one side 210 contacted to the cathode active material layer is coated with an adhesive-power reinforcing member and the other side 220 not contacted to the cathode active material layer is coated with an heat-resistance reinforcing member.

The cathode active material may be a common carbon-based material, and specifically, it may be at least one selected from the group consisting of: lithium metal, lithium alloy, carbon, petroleum coke, activated carbon, graphite and metal oxide, and preferably graphite.

In the present invention, the side, where the separation membrane 200 is contacted to the anode active material or the cathode active material in each of the anode units or cathode units, is coated with the adhesive-power reinforcing member. And, in a cell assembling process, before laminating the separation membrane and an anode electrode plate coated with the anode active material or a cathode electrode plate coated with the cathode active material, the side of the separation membrane coated with the adhesive-power reinforcing member is adhered to the active material layer by applying heat and pressure, and then lamination is conducted, thereby improving productability of the assembly process.

The separation membrane may be a multi-layered separation membrane manufactured by using polyethylene or polypropylene having micro porous structure, or a combination thereof, and preferably polyethylene.

In the present invention, a material for giving adhesive-power, which can be coated on the one side of the separation membrane, may be preferably at least one polymer selected from the group consisting of: polyvinylidenefloride (PVdF), polyethylene oxide, polyacrylonitrile and polyvinylidene fluoride hexafluoropropylene.

The polymer is a material applied for reinforcing adhesive-power between the coated separation membrane and the electrode plate, and it is characterized by having chemical resistance, and good mechanical, thermal and electrical characteristics at the same time.

Further, in the present invention, the other side of the separation membrane, not coated with the adhesive-power reinforcing member is coated with a material, which can reinforce heat-resistance.

In the present invention, the heat-resistance reinforcing member is characterized by comprising at least one ceramic selected from the group consisting of: aluminum oxide (Al₂O₃), magnesium oxide (MgO), silicon oxide (SiO₂), zirconia (ZrO₂), ceria (CeO₂), zinc oxide (ZnO), magnesium hydroxide (Mg(OH)₂), aluminum hydroxide (Al(OH)₃) and aluminum silicate.

In the present invention, the heat-resistance reinforcing member is characterized that it comprises a mixture of one ceramic selected from the group consisting of: aluminum oxide (Al₂O₃), magnesium oxide (MgO), silicon oxide (SiO₂), zirconia (ZrO₂), ceria (CeO₂), zinc oxide (ZnO), magnesium hydroxide (Mg(OH)₂), aluminum hydroxide (Al(OH)₃) and aluminum silicate; and polyvinylidene fluoride (PVdF), and the one ceramic selected from the group consisting of: aluminum oxide (Al₂O₃), magnesium oxide (MgO), silicon oxide (SiO₂), zirconia (ZrO₂), ceria (CeO₂), zinc oxide (ZnO), magnesium hydroxide (Mg(OH)2), aluminum hydroxide (Al(OH)₃) and aluminum silicate is contained in an amount of 50 wt% or less of the whole. When the amount of the ceramic excesses 50 wt% of the whole, coating uniformity may be deteriorated, and when it is less than 50 wt%, heat-resistance reinforcing effect may be deteriorated.

In the present invention, the heat-resistance reinforcing member is also characterized by comprising at least one selective copolymer having melting temperature of 200°C selected from the group consisting of: polyetherimide, polyamide, polyimide, polycarbonate, polysulfone, polyphenylenesulfide and polyphenyleneoxide, or a mixture thereof.

A manufacturing process of the electrode assembly according to the present invention comprises: i) a step of asymmetrically coating the separation membrane, ii) a step of manufacturing the anode unit and the cathode unit; iii) a step of locating the anode unit or the cathode unit on the separation membrane, asymmetrically coated with the adhesive-power reinforcing member, at a certain distance while supplying the asymmetrically coated separation membrane to the longitudinal direction; iv) a step of fusing the anode unit or the cathode unit located on the separation membrane with the separation membrane by applying heat and pressure; v) a step of cutting the long separation membrane, where the anode unit is located, or the long separation membrane, where the cathode unit is located, for each anode unit and each cathode unit; and vi) a step of alternatively laminating the anode unit and the cathode unit, where the separation membrane is attached.

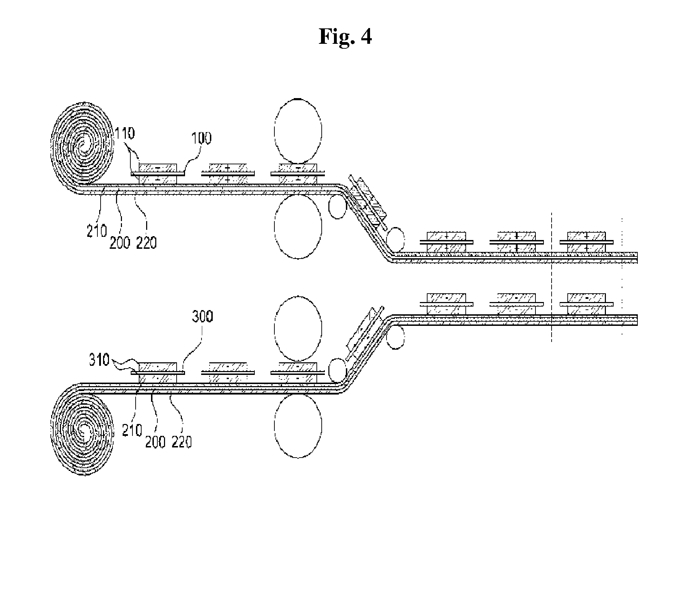

The process for manufacturing the electrode assembly according to the present invention was shown in FIG. 4.

As shown in FIG. 4, first of all, the separation membrane is prepared by coating the one side contacted to the anode unit or the cathode unit with the adhesive-power reinforcing member, and the other side with the heat-resistance reinforcing member.

For example, the separation membrane or the separation membrane sheet can be an insulating thin film having high ion permeability and mechanical strength. Pore diameter of the separation membrane or the separation membrane sheet is generally 0.01 ~ 10 µm, and thickness thereof is generally 5 ~ 300 µm. As the separation membrane or the separation membrane sheet, for example, an olefin-based polymer such as chemical resistant and hydrophobic polypropylene; or a sheet or non-woven fabric made with glass fiber or polyethylene and the like can be used. When a solid electrolyte such as a polymer is used as an electrolyte, the solid electrolyte can be also used as the separation membrane. Preferably, it may be a multi-layered film manufactured with a polyethylene film, a polypropylene film or a combination thereof, or a polymer film for a polymer electrolyte or for a gel-type polymer electrolyte such as polyvinylidene fluoride, polyethylene oxide, polyacrylonitrile or polyvinylidene fluoride hexafluoropropylene copolymer.

The side of the separation membrane contacted to the anode unit or the cathode unit is coated with the previously-described adhesive-power reinforcing member, and the other side thereof is coated with the heat-resistance reinforcing member. The coating can be conducted by a technique selected from the group consisting of spray coating, doctor blading, slot die coating, graveur coating, ink jet printing, spin coating and screen printing, but not limited thereto.

Then, the anode unit and the cathode unit are manufactured. For example, the anode unit is manufactured by coating a mixture of the anode active material, a conductive material and a binder on the anode collector followed by drying and pressing thereof, and according to the need, filler can be further added to the mixture. The anode collector is generally made to the thickness of 3 ~ 500 µm. There is no particular limit to the anode collector, so long as it has high conductivity without causing chemical changes in the manufactured battery. For example, it may be stainless steel, aluminum, nickel, titanium, sintered carbon, or aluminum or stainless steel, whose surface is treated with carbon, nickel, titanium, silver and the like. The collector can be formed to have fine irregular pattern on the surface thereof so as to enhance adhesive-power to the anode active material, and it can have various forms such as film, sheet, foil, net, porous structure, foam, non-woven fabric and the like.

For a lithium secondary battery, the anode active material may be, for example, a layered compound such as lithium cobalt oxide (LiCoO₂) and lithium nickel oxide (LiNiO₂) or a compound substituted with at least one transition metal; lithium manganese oxide such as a compound expressed by Li₁₊ₓMn₂₋ₓO₄ (wherein, x is 0 ~ 0.33), LiMnO₃, LiMn₂O₃ and LiMnO₂; lithium copper oxide (Li₂CuO₂); vanadium oxide such as LiV₃O₈, LiFe₃O₄, V₂O₅ and Cu₂V₂O₇; Ni-site type lithium nickel oxide expressed by LiNi₁₋ₓMₓO₂ (wherein, M = Co, Mn, Al, Cu, Fe, Mg, B or Ga, and x= 0.01 ~ 0.3); lithium manganese composite oxide expressed by LiMn₂₋ₓMₓO₂ (wherein, M = Co, Ni, Fe, Cr, Zn or Ta, and x = 0.01 ~ 0.1) or Li₂Mn₃MO₈ (wherein, M = Fe, Co, Ni, Cu or Zn); LiMn₂O₄ wherein a part of the Li is substituted with an alkali earth metal ion; a disulfide compound; Fe₂(MoO₄)₃; and the like, but not limited thereto.

The conductive material is generally added in an amount of 1 to 50 wt% based on the total weight of the mixture containing the anode active material. There is no particular limit to the conductive material, so long as it has suitable conductivity without causing chemical changes in the manufactured battery. For example, it may be graphite such as natural graphite or artificial graphite; carbon black such as carbon black, acetylene black, ketjen black, channel black, furnace black, lamp black, thermal black; conductive fiber such as carbon fiber or metal fiber; metal powder such as carbon fluoride, aluminum, nickel powder; conductive whisker such as zinc oxide, potassium titanate; conductive metal oxide such as titanium oxide; conductive material such as polyphenylene derivative; and the like.

The binder is a component assisting in binding between the active material and the conductive material, and in binding with the collector, and it is generally added in an amount of 1 to 50 wt% based on the total weight of the mixture including the anode active material. As examples of the binder, polyvinylidene fluoride, polyvinylalcohol, carboxymethylcellulose (CMC), starch, hydroxypropylcellulose, regenerated cellulose, polyvinylpyrrolidone, tetrafluoroethylene, polyethylene, polypropylene, ethylene-propylene-dien terpolymer (EPDM), sulfonated EPDM, styrene butadiene rubber, fluoro rubber and various copolymers can be used.

The filler is an ingredient used to inhibit anode expansion, and optionally used. There is no particular limit to the filler, so long as it does not cause chemical changes in the manufactured battery and is a fibrous material. As examples of the filler, olefin-based polymer such as polyethylene and polypropylene; and fibrous material such as glass fiber and carbon fiber can be used.

On the other hand, the cathode is manufactured by coating the cathode active material on the cathode collector followed by drying and pressing, and if necessary, the conductive material, binder, filler and the like as described above may be further added.

The cathode collector is generally manufactured to have a thickness of 3 ~ 500 µm. There is no particular limit to the cathode collector, so long as it has suitable conductivity without causing chemical changes in the manufactured battery. As examples thereof, copper, stainless steel, aluminum, nickel, titanium, sintered carbon, copper or stainless steel, whose surface is treated with carbon, nickel, titanium or silver, and aluminum-cadmium alloy can be used. Further, like the anode collector, it can be formed to have fine irregular patterns on the surface thereof so as to enhance adhesive-power to the cathode active material. It can be used in the various forms such as film, sheet, foil, net, porous structure, foam, non-woven fabric.

As examples of the cathode active material, carbon such as non-graphitizing carbon and graphite-based carbon; metal composite oxide such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, group I, II and III elements of the Periodic Table, halogen atom; 0<x≤1; 1≤y≤3; and 1≤z≤8); lithium metal; lithium alloy; silicon-based alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymer such as polyacetylene; and Li-Co-Ni-based material can be used.

As shown in FIG. 4, the anode unit or the cathode unit manufactured as described above is located on the asymmetrically coated long separation membrane at a certain distance to be contacted to the side of the separation membrane coated with the adhesive-power reinforcing member, and heat and pressure are added thereto so as to combine the separation membrane and the anode unit or the cathode unit by the adhesive-power reinforcing member coated on one side of the separation membrane.

Then, in a separate line, the manufactured cells of the anode unit and the cathode unit attached to the long separation membrane are stacked vertically and cut.

The electrode assembly is manufactured by laminating the anode units and the cathode units stacked as described above as shown in FIG. 4 as many as the manufacturer wants, and if necessary, the outside of the electrode assembly is wound one more time with the separation membrane so as to complete the electrode assembly.

In the present invention, according to another embodiment, the separation membrane, wherein both sides thereof are asymmetrically coated with the adhesive-power reinforcing member and the heat-resistance reinforcing member, is contained only in the alternatively stacked anode unit; and the separation membrane, wherein both sides thereof are coated with the adhesive-power member, or the separation membrane, wherein only one side thereof contacted to the cathode surface is coated with the adhesive-power member, can be used in the alternatively stacked cathode unit.

Further, according to further another embodiment, the asymmetrically coated separation membrane is only contained in the alternatively stacked cathode unit; and the separation membrane, wherein both sides thereof are coated with the adhesive-power reinforcing member, or the separation membrane, wherein only one side thereof contacted to the anode surface is coated with the adhesive-power member, can be used in the alternatively stacked anode unit.

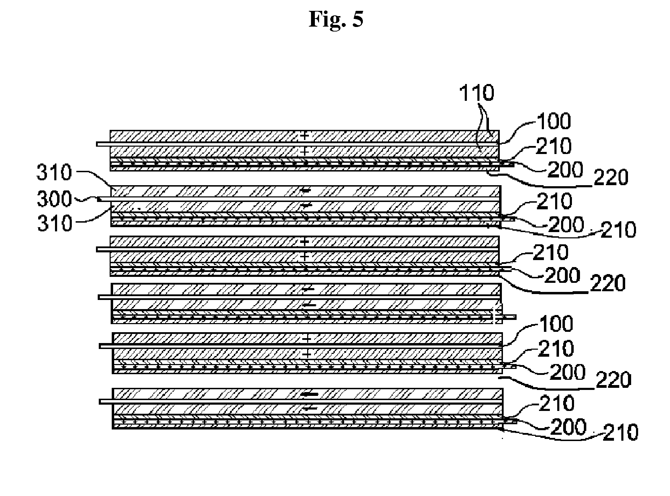

Further another embodiment of the present invention was shown in FIG. 5. FIG. 5 shows the case using the asymmetrically coated separation membrane only for the anode unit, and the separation membrane, wherein both sides thereof are coated with the adhesive-power reinforcing member, for the cathode unit.

Further, the present invention provides an electrochemical cell composed by comprising the electrode assembly. The electrode assembly according to the present invention can be applied to an electrochemical cell producing electricity by electrochemical reaction of the anode and the cathode. The electrochemical cell may be super capacitor, ultra-capacitor, secondary battery, fuel battery, various sensors, electrolysis apparatus, electrochemical reactor and the like, and the secondary battery is preferable.

Hereinafter, the present invention is explained by the following Examples and Test Examples in more detail. The following Examples and Test Examples are intended to further illustrate the present invention, and the scope of the present invention cannot be limited thereby in any way.

### <Example 1: Polyetherimide (PEI)/Polyvinylidenefloride (PVdF) Coating>

### <Example 1-1: Manufacture of Coated Separation Membrane>

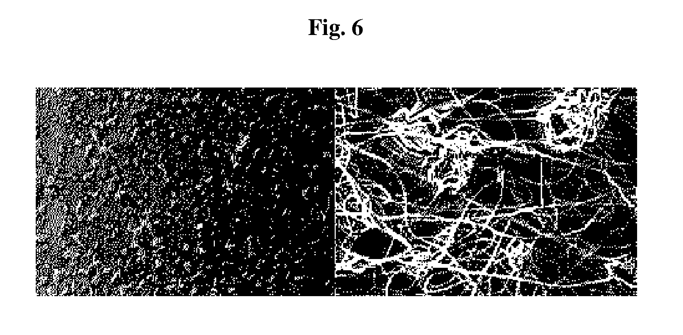

Both sides of a mono-layered separation membrane are coated by using electrospinning method, wherein one side thereof was coated on one side of the polyethylene (PE) and polyvinylidenefloride (PVdF) polymer was coated on the other side thereof, and at this time, each side was coated to the thickness of 7 µm on average. Further, the surface of the separation membrane coated with the polyetherimide (PEI)/polyvinylidenefloride (PVdF) was shown in FIG. 6.

### <Example 1-2: Manufacture of Unit and Electrode Plate Lamination>

An anode unit and a cathode unit, which were manufactured in advance, were located on the separation membrane manufactured in Example 1-1 at a certain distance, and each unit and the separation membrane were attached to each other by applying heat and pressure. The attachment using heat and pressure was conducted by using a lamination apparatus while maintaining temperature and pressure between an upper roll and a lower roll at 105°C and 5 kgf/cm², respectively. The process was conducted not to physically damage an electrode plate and the separation membrane, and foreign matter management was conducted at the same time.

### <Example 2: Al₂O₃ / PVdF Coating>

### <Example 2-1: Manufacture of Asymmetrically Coated Separation Membrane>

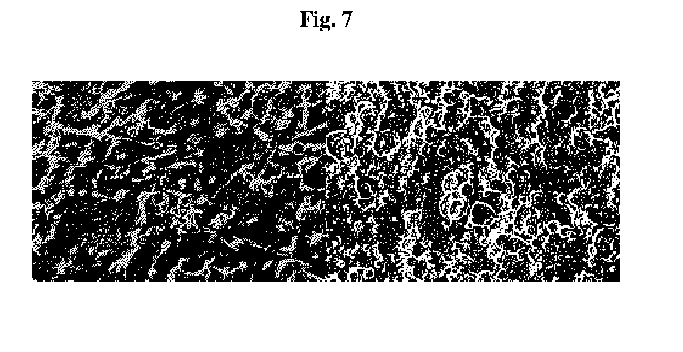

An Al₂O₃ material was coated on one side of a Polyethylene (PE) mono-layered separation membrane, and polyvinylidenefloride (PVdF) polymer was coated on the other side thereof by using electrospinning method, and at this time, each side was coated to the thickness of 5 µm on average. The surface of the layer coated with the alumina (Al₂O₃)/polyvinylidenefloride (PVdF) as described above was shown in FIG. 7.

### <Example 2-2: Manufacture of Unit and Electrode Plate Lamination>

The procedure for manufacturing a unit and electrode plate lamination of Example 1-2 was repeated except for using the separation membrane manufactured in Example 2-1.

### <Comparative Example 1>

As a separation membrane, a polyethylene (PE) mono-layered film was used. Namely, a separation membrane not coated with an adhesive-power reinforcing member and a heat-resistance reinforcing membrane was used.

### <Preparation Example: Manufacture of Electrode Assembly (Jelly Roll) and Battery>

The anode electrode plate and the cathode electrode plate, which were stacked by heat and pressured as described in Example 1-2, were alternatively stacked, cut in accordance with specifications, and then the anode assembly and the cathode assembly were alternatively stacked, the outsides of the stacked electrode plates were covered by using the separation membrane in order to fix a jelly roll stacked in constant quality. That was welded and an electrolyte was injected so as to complete the battery assembly, and performance test was conducted.

Jelly roles and batteries were manufactured by repeating the above procedure and using the separation membranes of Example 2-2 and Comparative Example.

### <Test Example 1: Evaluation of Battery Discharge Performance and Capacity>

In order to evaluate performances of the batteries manufactured by using the separation membranes of Examples 1 and 2 and Comparative Example 1, C-rate (evaluation of capacity expression according to current rate) was measured according to the following process.

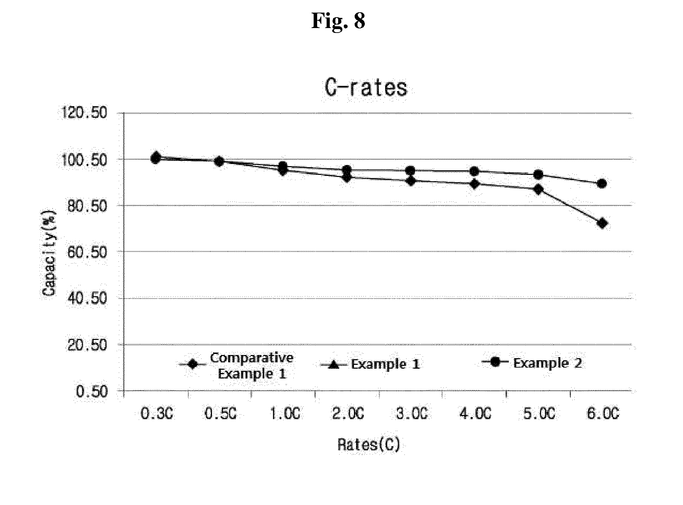

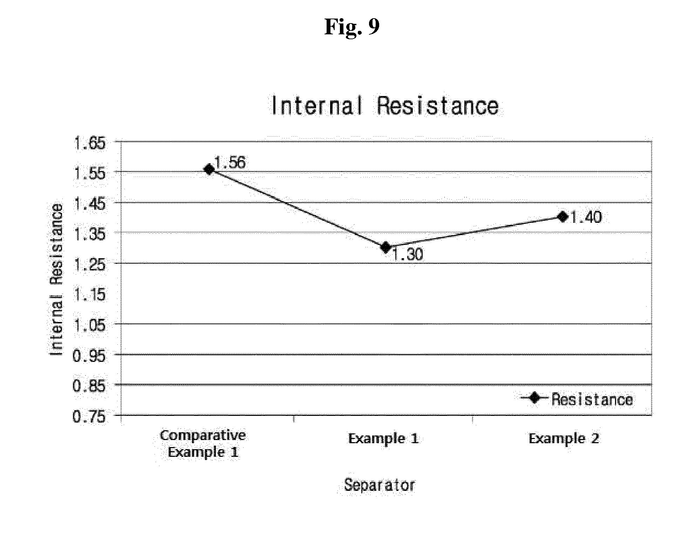

The batteries manufactured in the above Examples were cycled at the discharge rate listed in the following Table 1, and their discharge capacities were shown in high rate discharge of FIG. 8 and Table 1 according to C-rate. Further, internal resistances were shown in FIG. 9 and Table 2.

**Table 1**

| Rates(C) | Example 1 | Example 2 | Comparative Example 1 |
|---|---|---|---|
| 0.3 C | 101.44% | 101.53% | 101.89% |
| 0.5 C | 100.00% | 100.00% | 100.00% |
| 1.0 C | 97.76% | 97.95% | 96.44% |
| 2.0 C | 96.34% | 96.34% | 93.20% |
| 3.0 C | 96.13% | 95.81% | 91.70% |
| 4.0 C | 95.79% | 95.62% | 90.22% |
| 5.0 C | 94.44% | 94.22% | 87.98% |
| 6.0 C | 90.82% | 90.40% | 73.37% |

**Table 2**

| Section | internal resistance (mΩ) |
|---|---|
| Example 1 | 1.30 |
| Example 2 | 1.40 |
| Comparative Example 1 | 1.54 |

As the results, shown in FIG. 8 and Table 1, the performances were not different at low rate, but it was found that, as the discharge became higher rate, Examples 1 and 2 showed better performance curves when comparing the results of Examples 1 and 2 using the coated separation membranes and Comparative Example 1.

Compared with the uncoated separation membrane of Comparative Example 1, the coated separation membranes of Examples 1 and 2 according to the present invention, conducting lamination by adding heat and pressure, showed relatively higher adhesion to the electrode plate. Thus, as shown in FIG. 9, it could be found that the above effect could be obtained because the internal resistance was lowered.

### <Test Example 2: Cycle Life>

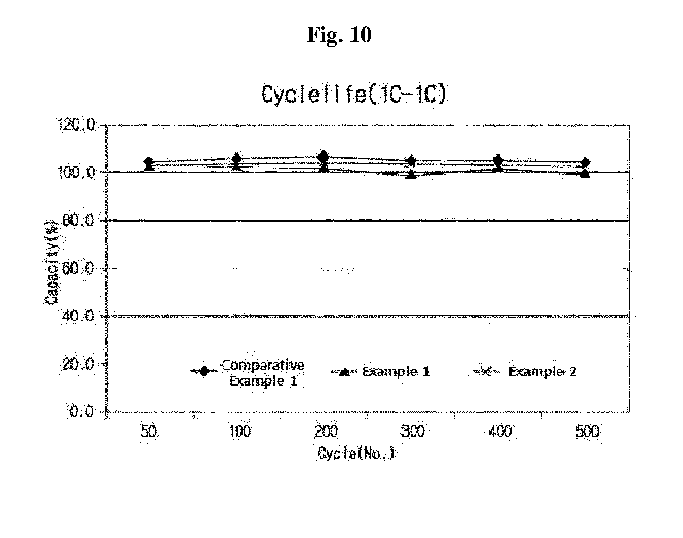

Cycle life characteristics were different on progressing curve due to small deviation between initial capacities of Examples and Comparative Example. But in light of the direction of the curve, it was confirmed that the characteristics were similar in Comparative Example 1 and Examples 1 and 2. These results were shown in FIG. 10.

### <Test Example 3: Battery Safety Evaluation>

Nail penetration was conducted to evaluate safety of the batteries manufactured in Examples 1 and 2.

Each battery was penetrated through the center of the cell by a nail with a diameter of 3 mm, at a speed of 80 mm/sec.

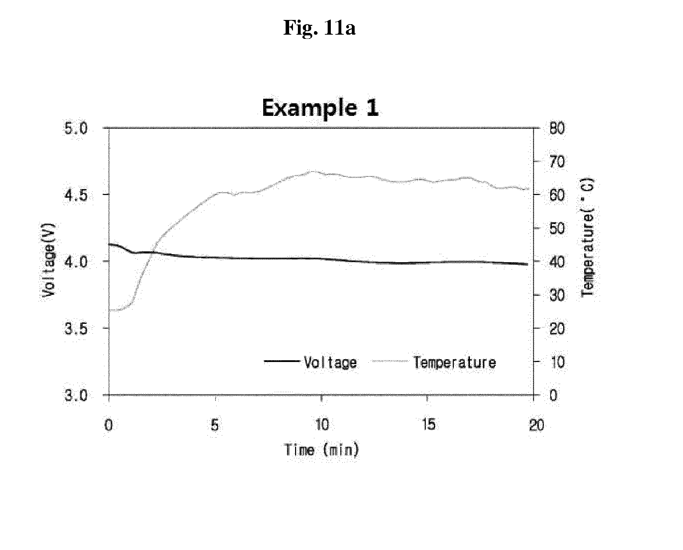

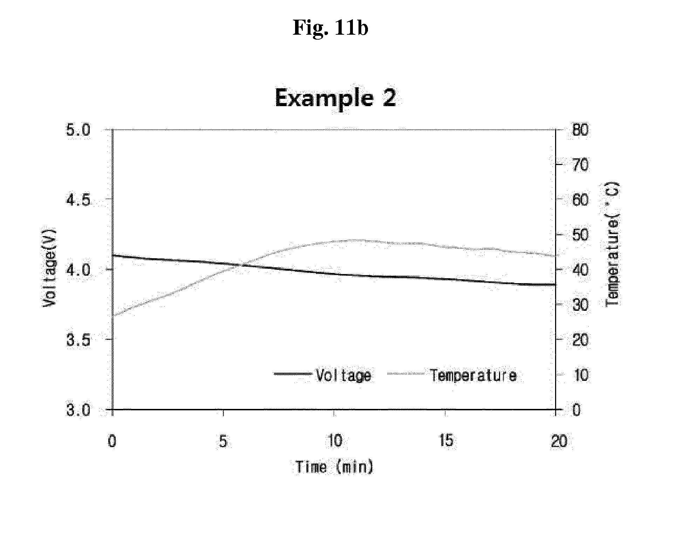

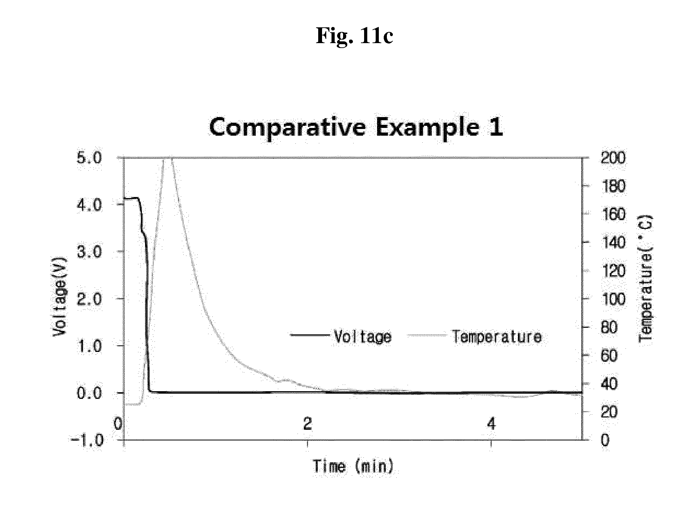

As the result, ignition and explosion occurred in Comparative Example 1, but it was confirmed that Examples 1 and 2 showed thermal stability except for leaking of the electrolyte by the nail penetration. These results were shown in FIG. 11.

Through these results, it was confirmed that the samples, wherein materials having good heat-resistance is coated on the separation membrane, like the asymmetrically coated separation membranes of Examples 1 and 2 showed improved battery stability caused by improved durability to heat generated from external shortcut, i.e., heat resistance, compared with the uncoated separation membrane of Comparative Example 1.

### Industrial Applicability

In the present invention, one side of a separation membrane attached to an anode active material or a cathode active material in each anode unit or a cathode unit is coated with an adhesive-power reinforcing member for giving adhesive-power and then pressed by applying heat and pressure during an electrode assembly manufacturing process, thereby attaching an active material-coated collector to the separation membrane so as to enable to operate integrally and improve workability and productivity; and also the other side of the separation membrane was coated for giving heat-resistance reinforcement against external impact or internal short-circuit and the like. Therefore, the present invention showed improved battery discharge capacity, life characteristic and safety.

While the invention has been described with respect to the above specific embodiments, it should be recognized that various modifications and changes may be made and also fall within the scope of the invention as defined by the claims that follow.

## Claims

1. In an electrode assembly, which is composed by alternatively laminating a plurality of: anode units comprising an anode collector, anode active material layers coated on both sides of the anode collector, and a separation membrane attached to one side of the anode collector; and cathode units comprising an cathode collector, cathode active material layers coated on both sides of the cathode collector, and a separation membrane attached to one side of the cathode collector,
an electrode assembly comprising an asymmetrically coated separation membrane, wherein one side thereof, attached to each active material in the anode unit or the cathode unit, and the other side thereof are asymmetrically coated with an adhesive-power reinforcing member and a heat-resistance reinforcing member, respectively.

2. The electrode assembly comprising an asymmetrically coated separation membrane according to claim 1, wherein the heat-resistance reinforcing member comprises at least one ceramic selected from the group consisting of: aluminum oxide (Al₂O₃), magnesium oxide (MgO), silicon oxide (SiO₂), zirconia (ZrO₂), ceria (CeO₂), zinc oxide (ZnO), magnesium hydroxide (Mg(OH)₂), aluminum hydroxide (Al(OH)₃) and aluminum silicate(aluminum silicate).

3. The electrode assembly comprising an asymmetrically coated separation membrane according to claim 2, wherein the heat-resistance reinforcing member comprises a mixture of one ceramic selected from the group consisting of: aluminum oxide (Al₂O₃), magnesium oxide (MgO), silicon oxide (SiO₂), zirconia (ZrO₂), ceria (CeO₂), zinc oxide (ZnO), magnesium hydroxide (Mg(OH)₂), aluminum hydroxide (Al(OH)₃) and aluminum silicate(aluminum silicate), and polyvinylidene fluoride (PVdF); wherein the one ceramic, selected from the group consisting of: aluminum oxide (Al₂O₃), magnesium oxide (MgO), silicon oxide (SiO₂), zirconia (ZrO₂), ceria (CeO₂), zinc oxide (ZnO), magnesium hydroxide (Mg(OH)₂), aluminum hydroxide (Al(OH)₃) and aluminum silicate(aluminum silicate), is contained in an amount of 50 wt% or less of the total mixture.

4. The electrode assembly comprising an asymmetrically coated separation membrane according to claim 1, wherein the heat-resistance reinforcing member comprises at least one selective copolymer selected from the group consisting of: polyetherimide, polyamide, polyimide, polycarbonate, polysulfone, polyphenylenesulfide, and polyphenyleneoxide; or a mixture thereof.

5. The electrode assembly comprising an asymmetrically coated separation membrane according to claim 1, wherein the adhesive-power reinforcing member comprises at least one polymer selected from the group consisting of: polyvinylidenefloride (PVdF), polyethylene oxide, polyacrylonitrile, polyethylene oxide, polyacrylonitrile and polyvinylidene fluoride hexafluoropropylene.

6. The electrode assembly comprising an asymmetrically coated separation membrane according to claim according to claim 1, wherein the asymmetrically coated separation membrane is only contained in the alternatively stacked anode units; and the alternatively stacked cathode units contain a separation membrane, wherein both sides thereof are coated with the adhesive-power member, or a separation membrane, wherein only one side thereof is coated with the adhesive-power member.

7. The electrode assembly comprising an asymmetrically coated separation membrane according to claim according to claim 1, wherein the asymmetrically coated separation membrane is only contained in the alternatively stacked cathode units; and the alternatively stacked anode units contain a separation membrane, wherein both sides thereof are coated with the adhesive-power member, or a separation membrane, wherein only one side thereof is coated with the adhesive-power member.

8. An electrochemical cell, which comprises the electrode assembly comprising an asymmetrically coated separation membrane according to any one of claims 1 to 7.

9. The electrochemical cell according to claim 8, which is a secondary battery or a capacitor.
